(19) Europäisches Patentamt
European Patent Office
Office européen des brevets

(11) **EP 2 502 384 B1**

(12) **FASCICULE DE BREVET EUROPEEN**

(45) Date de publication et mention
de la délivrance du brevet:
**21.12.2016 Bulletin 2016/51**

(51) Int Cl.:
***H04L 12/18*** *(2006.01)*     ***H04W 84/18*** *(2009.01)*
***H04W 4/06*** *(2009.01)*

(21) Numéro de dépôt: **10774233.0**

(22) Date de dépôt: **10.11.2010**

(86) Numéro de dépôt international:
**PCT/EP2010/067202**

(87) Numéro de publication internationale:
**WO 2011/061105 (26.05.2011 Gazette 2011/21)**

(54) **PROCEDE ET SYSTEME POUR DISTRIBUER DU CONTENU AVEC DES GARANTIES DE DELAIS DE LIVRAISON DANS LES RESEAUX RADIO HYBRIDES**

VERFAHREN UND SYSTEM ZUR INHALTSVERTEILUNG MIT LIEFERZEITSKALAGARANTIEN IN HYBRIDEN FUNKNETZEN

METHOD AND SYSTEM FOR DISTRIBUTING CONTENT WITH GUARANTEES OF DELIVERY TIMESCALES IN HYBRID RADIO NETWORKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2009 FR 0905518**

(43) Date de publication de la demande:
**26.09.2012 Bulletin 2012/39**

(73) Titulaire: **Thales**
**92400 Courbevoie (FR)**

(72) Inventeurs:
• **LEGUAY, Jérémie**
**F-92700 Colombes (FR)**
• **CONAN, Vania**
**F-92700 Colombes (FR)**
• **WHITBECK, John**
**F-92700 Colombes (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A2- 1 133 116**     **WO-A2-03/105353**
**US-A1- 2006 221 891**

• **IOANNIDIS S ET AL: "Optimal and Scalable Distribution of Content Updates over a Mobile Social Network", INFOCOM 2009. THE 28TH CONFERENCE ON COMPUTER COMMUNICATIONS. IEEE, IEEE, PISCATAWAY, NJ, USA, 19 avril 2009 (2009-04-19), pages 1422-1430, XP031468897, ISBN: 978-1-4244-3512-8 cité dans la demande**

**Description**

L'objet de la présente invention concerne la distribution de données ou distribution de contenus en respectant des contraintes de délais dans un réseau de communications radio hybride caractérisé par la présence d'au moins deux canaux de communications radio aux caractéristiques différentes. Typiquement, l'un sera omniprésent, et éventuellement à faible débit, tandis que l'autre sera moins fréquemment disponible, mais offrant des débits plus élevés, la valeur du rapport du faible débit et du débit plus élevé étant par exemple de 10.

Un "faible débit" correspond par exemple à environ 100kB/s et les "débits plus élevés" à environ 1 Mbit/s.

Le procédé selon l'invention s'applique par exemple:

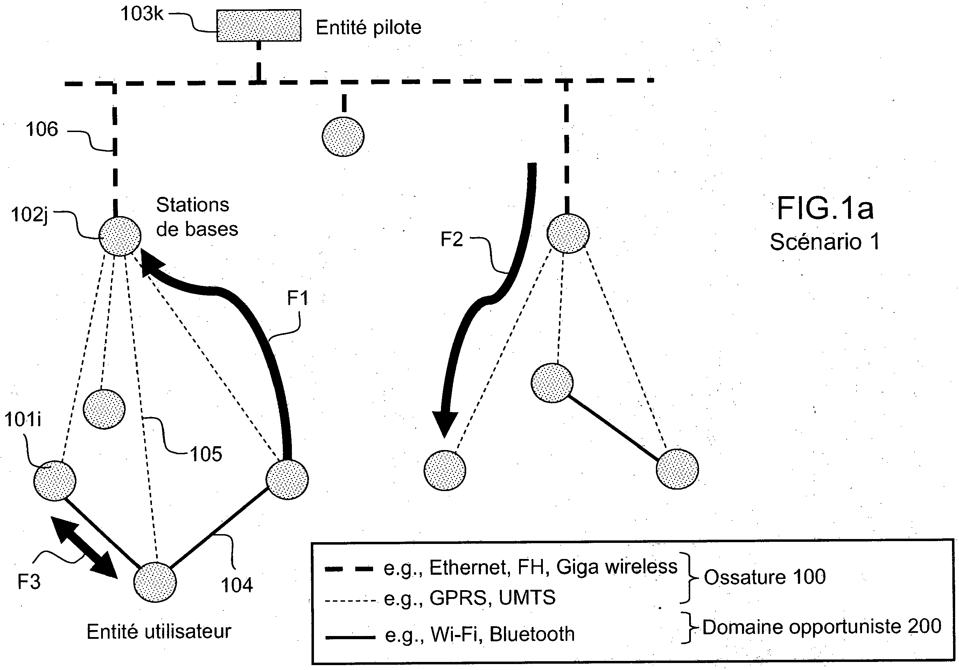

• Scénario 1 représenté à la figure 1a: Dans un réseau constitué d'appareils mobiles (e.g. des téléphones portables) ou entités utilisateurs 101i pouvant communiquer entre eux directement par le système Bluetooth ou WiFi ad-hoc (liaison 104) représenté par des traits pleins et la flèche F3 et d'antennes relais fixes qui peuvent être des stations de, bases (102j) ou d'autres entités mobiles qui communiquent entre elles selon la flèche F3 sur un réseau d'infrastructure de type GSM (Global System Mobile) ou WiFi infrastructure (technologie de réseau informatique sans fil mise en place pour fonctionner en réseau interne). L'ossature 100 du système est composée par exemple d'un réseau Ethernet, FH ou Giga wireless sur laquelle sont reliée des entités pilotes (103k) et des stations de base. La communication entre les entités utilisateurs et les entités pilotes se fait par l'intermédiaire des stations de base 102j selon la flèche F1 ou F2 et par des liaisons UMTS ou GPRS (105). Une station de base communique avec une entité pilote via des liaisons Ethernet, FH ou encore Giga wireless (106). Le domaine opportuniste 200 est notamment constitué de stations de base et d'entités utilisateurs qui communiquent entre elles via la liaison 104.

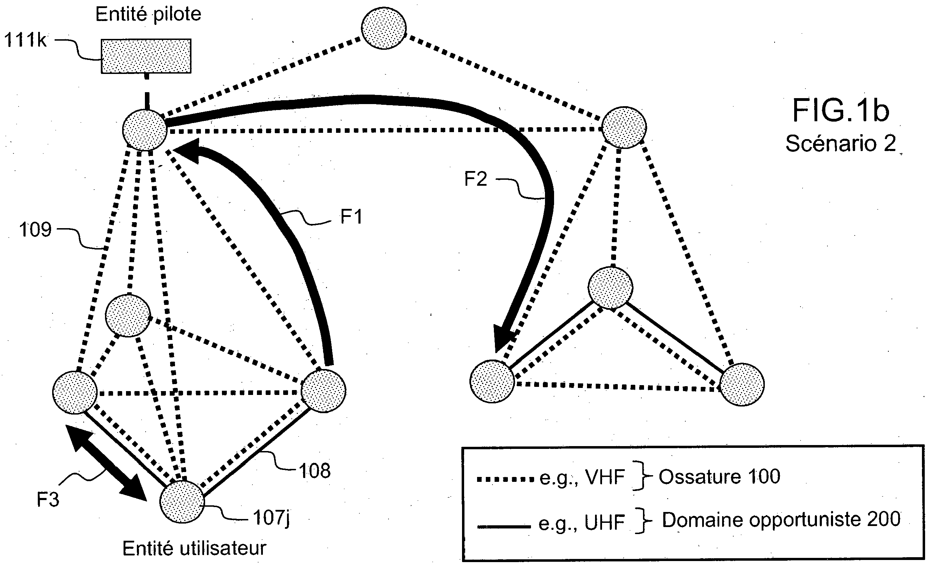

• Scénario 2 représenté sur la figure 1b: Dans un réseau entièrement mobile, dont les noeuds 107i possèdent une radio UHF (abréviation de Ultra High Frequency)) courte portée mais haut débit (liaison 108), et/ou une radio VHF (Abréviation de Very High Frequency) longue portée mais à faible débit (liaison 109). Les noeuds mobiles 107i communiquent entre eux (flèche F3) et grâce à la VHF (flèche F1), par la UHF si les noeuds sont en portée radio (flèche F2) ou par une combinaison des deux (flèche F3). Les entités pilotes 111k peuvent se situer sur n'importe qu'elle entité du réseau. Le domaine opportuniste 200 est constitué dans ce cas des entités utilisateurs mobiles qui communiquent entre elles par exemple via des liaisons UHF.

Le mot « ossature » désigne dans les exemples qui vont être donnés, un réseau d'infrastructure GSM ou 3G ou en un réseau de noeuds mobiles qui sont équipés de radio de type ad hoc utilisant des technologies VHF.

Le mot « opportuniste » désigne l'ensemble des opportunités de communication crées au gré de la mobilité des noeuds mobiles Uj lorsqu'ils sont en portée radio : typiquement Wi-Fi de type ad hoc pour l'exemple de scénario (1) et communication UHF de type ad hoc pour le scénario(2).

Dans le reste de la description illustrant l'invention, on fera une distinction entre d'une part l'"ossature" du réseau, constitué d'entités fixes et/ou mobiles offrant un accès réseau omniprésent, plutôt à faible débit et éventuellement connecté à un réseau filaire (e.g. Internet), et d'autre part le domaine "opportuniste" du réseau, fréquemment déconnecté, constitué des entités dont la mobilité génère des opportunités de communications haut-débit.

Ces deux réseaux se superposent géographiquement et les entités "opportuniste" sont capables d'utiliser le réseau omniprésent offert par l'ossature du réseau. Cet accès à l'ossature du réseau se fait ou bien par une communication radio fréquence (e.g. GSM ou WiFi), ou bien directement quand une entité est à la fois opportuniste et intégrée à l'ossature du réseau (e.g. lorsque chaque entité embarque à la fois des radios UHF et VHF).

Parmi les différentes entités du réseau, on qualifiera d'«utilisateurs» les entités qui souscrivent et/ou produisent du contenu, et de « pilotes » celles qui agrègent les abonnements et les offres de contenus dont elles contrôlent la diffusion. Une même entité peut aussi être à la fois "utilisateur" et "pilote".

Les utilisateurs du réseau peuvent être classifiés selon plusieurs axes:

• Rôle: on distingue les "éditeurs", qui publient du contenu, et les "abonnés" qui souscrivent à un contenu. Un même utilisateur peut être à la fois "éditeur" et "abonné".

• Mobilité: Par abus de langage, on distinguera les utilisateurs "mobiles", présents sur le réseau opportuniste et capable de se connecter à l'ossature du réseau, et les utilisateurs "fixes", uniquement présents dans l'ossature.

Par ailleurs, on définit sous le mot "contenu" ou sous l'expression "contenu d'informations" un ensemble de données ou d'informations qui doivent être disponibles pour un utilisateur ayant souscrit à un service.

Les expressions "noeud mobile" ou "entité mobile" désignent un même objet.

Dans un réseau ad hoc, chaque entité ou noeud du réseau va communiquer directement avec ses voisins sans passer par une infrastructure. Si la destination n'est pas en portée radio de la source, cette dernière peut faire passer ses données par une suite d'autres entités qui se chargeront de les acheminer grâce à un protocole de routage enfoui dans chacune d'elle.

Les réseaux comprenant des entités mobiles communiquant avec des entités fixes situées dans l'infrastructure sont en général plus bas débit que les liaisons ad hoc mais ils bénéficient d'une portée radio plus longue. Les capacités de communication entre l'infrastructure et les entités mobiles sont très souvent des ressources critiques et coûteuses (coûteuse par exemple sur la qualité du service global qui se traduit par un besoin en bande passante). Lorsque l'on désire transférer du contenu vers un grand nombre d'entités mobiles, le réseau risque alors de s'effondrer ou le service proposé de devenir trop onéreux.

Dans le cas de réseaux de télécommunications grand public, les entités mobiles que sont les téléphones portables sont munis d'une connectivité vers un ou plusieurs réseaux d'infrastructure 3G (norme de téléphonie mobile) et/ou Wi-Fi par exemple, et sont également munis de capacités de communication ad hoc vers les autres entités mobiles (Bluetooth et/ou Wi-Fi en mode ad hoc). Les entités fixes, représentant, par exemple des fournisseurs de contenu, peuvent être des serveurs situés dans le coeur de l'Internet. Dans la terminologie utilisée dans la présente invention, les entités mobiles sont des utilisateurs mobiles, tandis que les fournisseurs de contenu sont à la fois des utilisateurs fixes et des pilotes. Les antennes relais et les routeurs du réseau de l'opérateur, constituent l'ossature du réseau.

Dans ces réseaux hybrides, du contenu peut alors être échangé comme il est illustré à la figure 1a ou à la figure 1b des entités pilotes vers les entités utilisateurs ou des utilisateurs vers les entités pilotes, voir la flèches référencées F1 et F2, entre les entités utilisateurs eux-mêmes, selon la flèche référencée F3. Plus précisément :

La flèche F1 correspond à l'envoi d'un contenu par une entité pilote 103k dans Internet, par exemple, vers les entités utilisateur 101i La transmission du contenu devant être distribué à un utilisateur qui a souscrit à un service, peut être relayée d'un utilisateur à un autre.
La flèche F2 correspond à l'envoi d'un contenu entité utilisateur mobile 101 i vers une entité pilote 103k.
La flèche F3 est l'échange (l'envoi ou la réception d'un contenu) entre les utilisateurs mobiles 101 i.

De nombreux paradigmes ou modèles de communication peuvent être mis en place pour ces échanges d'information, comme par exemple :

le modèle client-serveur dans lequel les utilisateurs fixes hébergent le contenu sur des serveurs auxquels les utilisateurs mobiles peuvent se connecter pour récupérer le contenu qui les intéresse. Les utilisateurs mobiles recherchent parmi la liste des contenus disponibles sur les serveurs ceux qui les intéresse; le modèle publication/souscription connu de l'Homme du métier consiste en une messagerie asynchrone où les émetteurs (éditeurs) de messages n'envoient pas leurs messages vers des récepteurs spécifiques ou abonnés. Au lieu de cela, les messages publiés sont identifiés par des classes. Les abonnés expriment leur intérêt pour les classes de messages qu'ils souhaitent recevoir, sans connaissance, a priori, des classes publiées. Ce découplage entre les éditeurs et les abonnés permet le passage à l'échelle et permet de gérer une forte dynamique de la topologie réseau. L'exemple choisi pour illustrer le procédé selon l'invention sera donné dans le cadre d'un modèle de publication/souscription.

Les utilisateurs ayant « souscrit » à une série de contenus, ou d'informations, à la manière d'une souscription à un flux RSS (RSS désigne une famille de formats XML utilisés pour la syndication de contenu Web) peuvent avoir des contraintes de délais en réception. A titre d'exemple, les personnes ayant souscrit aux versions journalières PDF (Portable Document Format) d'un journal (par exemple, le New York times) dont l'information n'est pertinente que le jour de la publication, désirent recevoir la version journalière avant midi chaque jour. Ces contraintes en délais de réception peuvent être relaxées pour d'autres types de contenu, comme des titres de musique (par exemple un fichier MP3) d'un artiste donné, ou des reportages documentaires en vidéo (par exemple l'histoire de France ou d'autres sujets).

Les services visés pour lesquels le procédé et le système selon l'invention peuvent être appliqués sont, par exemple, des services de contenus à la demande, en analogie avec la télévision à la demande (VoD abréviation anglo-saxonne de Video on Demand). Ces contenus peuvent être par exemple : des mises à jour logicielles, des vidéos (épisodes d'une série télé, documentaires), un journal en version électronique, des publications d'un blog.

Dans ce contexte, la démultiplication des canaux de communication entre éditeurs et abonnés interdit l'utilisation d'approches comme la diffusion multicast (méthode de diffusion de l'information d'un émetteur (source unique) vers un groupe (plusieurs supports/medias). La distribution massive d'un même contenu en provenance d'un fournisseur/hébergeur de service et à destination d'utilisateurs mobiles s'effectue le plus souvent en diffusant successivement le contenu à chacun des utilisateurs intéressés. Ceci pose notamment des problèmes de charge sur l'ossature du réseau. Le procédé de type multicast, ne permet donc pas de distribuer massivement du contenu à destination d'utilisateurs mobiles tout en garantissant que le contenu d'informations attendu par un utilisateur parvienne dans un délai donné tout en minimisant la charge sur l'ossature du réseau.

Le modèle publication/souscription permet de mettre en relation les producteurs et les consommateurs de données, en minimisant les échanges par des mécanismes d'abonnement et de gestion des flux.

Dans la majeure partie des cas d'utilisations, le modèle publication/souscription est supporté par un intergiciel orienté messages ou MOM (abréviation anglo-saxonne de Message-Oriented Middlewares). Le service de distribution de données pour des systèmes temps-réels ou en langue anglo-saxon « Data Distribution Service for Real-time Systems (DDS) [DDS] » est, par exemple, une spécification d'un MOM fonctionnant sur le modèle publication/souscription offrant des garanties temps réel sur un réseau local LAN (en anglais, Local Area Network). Ces intergiciels fournissent un canal de communication partagé et omniprésent dans les systèmes d'informations modernes qui permet à de nombreuses applications hétérogènes de s'intégrer et d'échanger des messages.

Dans le domaine du pair à pair (P2P en anglais, peer-to-peer) permettant à plusieurs ordinateurs de communiquer via un réseau, de partager simplement des objets, de nombreuses approches ont été proposées pour distribuer des données en soulageant les serveurs de contenu. Un exemple de protocole connu de l'art antérieur permet à une entité (appelée *seed,* graine en anglais) de partager un contenu avec un grand nombre en réduisant l'impact en termes de bande passante, utilisation processeur sur elle-même. Les utilisateurs désirant récupérer le contenu sont appelés pairs (peer en anglais). Chaque pair ayant récupéré une partie du contenu la met immédiatement à disposition des autres.

Dans le type de réseau considéré dans ce document, la topologie change régulièrement aux grés des rencontres entre les entités mobiles, et/ou entre les entités mobiles et l'ossature du réseau. La difficulté pour les implémentations traditionnelles du modèle publication/souscription est donc de construire et de maintenir les index permettant de mettre en relation éditeurs et abonnés, puis de distribuer le contenu d'un point à un autre en passant les messages d'une entité mobile à une autre au gré de la mobilité.

Pour le routage du contenu dans un réseau constitué uniquement d'entités mobiles, de nombreux travaux ont été conduit dans le domaine des réseaux tolérants aux délais (DTN en anglais, Delay/Disruption Tolerant Networks). Dans les DTNs, les noeuds sont mobiles et se rencontrent de manière opportuniste ou prévisible. Le nombre de noeuds voisins (avec qui un noeud est en contact) à chaque instant est assez faible et le graphe de connectivité est en permanence partitionné. La probabilité d'avoir un chemin de bout en bout entre une paire de noeuds à un instant donné est donc très faible (voire nulle) lorsqu'ils ne sont pas à portée l'un de l'autre. L'acheminement des paquets de données ne pouvant se faire avec les mécanismes de routage IP classiques (e.g. Internet) dans les réseaux DTN, il peut se baser sur le principe suivant : stockage et transmission (en anglais, « Store and Forward »). Par exemple, les messages peuvent être routés avec un routage épidémique dans lequel les messages se propagent de manière épidémique dans le réseau. Selon un autre type de routage de type "Spray and Wait" le noeud source décide de transmettre le message à N noeuds qu'il rencontre. D'autres méthodes connues de l'art antérieur considèrent l'historique des contacts qui est utilisé afin de déterminer s'il est opportun ou non de retransmettre un message.

Il est aussi connu d'utiliser un algorithme distribué permettant de construire des communautés d'utilisateurs ayant une mobilité similaire. Le noeud le plus central d'une communauté est élu courtier (broker en anglais) afin de supporter des disséminations de données de type publication/souscription au sein de ces communautés.

Dans la publication de Stratis Ioannidis, Augustin Chaintreau et Laurent Massoulié, intitulée « Optimal and Scalable Distribution of Content Updates over a Mobile Social Network », Proc of INFOCOM 2009, Rio de Janeiro, Brésil, les auteurs étudient la dissémination de flots de contenu (e.g., flux RSS) à partir de serveur dans l'infrastructure vers des utilisateurs mobiles dans les réseaux hybrides supportant la dissémination épidémique du contenu en utilisant les capacités de communication ad hoc. Les auteurs proposent une méthode permettant au fournisseur de contenu d'allouer aux utilisateurs mobiles une certaine bande passante sur le réseau d'accès à l'infrastructure telle que la fraîcheur globale du contenu soit maximale, tout en étant équitable vis à vis de la quantité de contenu reçu par les utilisateurs. Dans cette publication, l'allocation des ressources sur le réseau d'infrastructure s'effectue de manière statique et globale en considérant une unique source de contenus. Aucune boucle de contrôle n'est utilisée pour réallouer les ressources en fonction des performances réelles observées.

Le brevet EP 1 133116 décrit un procédé de dissémination de messages dans un réseau hybride.

Malgré tous les avantages qu'elles présentent, les méthodes connues de l'art antérieur ne permettent pas d'ajuster la dissémination des données au cours du temps en fonction de l'avancée de cette dissémination pour respecter les délais requis, délais dans lesquels les informations doivent être délivrées à un utilisateur.

L'objet de la présente invention concerne un procédé pour disséminer des messages Mi ou le contenu d'informations dans un réseau dit hybride comprenant une ossature de réseau comprenant des entités pilotes, une entité pilote comprenant au moins une base de données de contenu ou de messages à disséminer, un module d'ordonnancement des transferts des messages, un module de courtage, un module de mesure de l'état de dissémination des messages Mi et un réseau mobile composé de N noeuds mobiles i, lesdits noeuds mobiles communiquant de manière « ad hoc » entre eux lorsqu'ils sont en portée radio, ladite infrastructure communiquant avec les entités mobiles i du réseau mobile caractérisé en ce que le processus gérant les rencontres entre deux noeuds utilisateurs mobiles suit une loi de Poisson d'intensité A et en ce qu'il comporte au moins les étapes suivantes :

- Au niveau de chacune des entités pilotes de l'ossature du réseau, exécuter un algorithme d'ordonnancement des transferts d'au moins un message Mi en exécutant les étapes suivantes:

- Soit $S_C(t)$ l'ensemble des noeuds mobiles ayant souscrit au contenu de type C.
- Soit *Mi* un message correspondant au contenu de type C,
- Pour chaque message *Mi* contenu dans la base de données, si un noeud mobile i est présent dans le voisinage d'une entité pilote, alors si i est abonné au contenu de type Mi, transférer le message Mi à l'utilisateur mobile i,
- Soit $I_{Mi}(t)$ le nombre de noeuds ayant reçu un message Mi contenant des informations dans le réseau à l'instant *t*:
- Soit ETAT, l'état général du processus de dissémination du message Mi, ETAT prenant une valeur initiale « ENCOURS ».
- Tant que ETAT = « ENCOURS », exécuter toutes les ∆T secondes les étapes suivantes:

    o Récupérer du module de mesure d'états de la dissémination les états $I_{Mi}(t)$ indiquant à l'instant courant *t* les noeuds mobiles ou entités du réseau mobile ayant reçu le message *Mi,*

    ∘ Récupérer du module de courtage l'ensemble $S_c(t)$ des utilisateurs mobiles abonnés au contenu de type Type C

    o Si cardinal $I_{Mi}(t)$ = cardinal $S_C(t)$.

       ▪ Mettre ETAT = « ARRETER »

    o SINON

       ▪ Calculer Texp(Mi), le temps restant avant expiration de Mi,

       ▪ Si Texp(Mi) > 0, c'est-à-dire qu'il reste du temps avant que le contenu du message Mi devienne obsolète,

          • Appeler la fonction « Dissémination(Mi, $I_{Mi}$, $S_C$) » qui va permettre de disséminer ou transmettre le message *Mi* à toutes les entités qui ont souscrit au contenu de type C.

       ▪ Sinon

          • Retirer Mi de la base de données, le contenu du message Mi (informations) est devenu obsolète.

Le processus gérant les rencontres entre deux noeuds mobiles i suit, par exemple, une loi de Poisson d'intensité λ et en ce que la fonction de dissémination comporte au moins les étapes suivantes:

la probabilité pour qu'un noeud ou entité mobile i n'ayant pas encore reçu le message le reçoive est donnée par :

- $$Pr\left[I(t+dt) - I(t) = 1\right] = \lambda I(t)\left[N - I(t)\right]dt + o(dt)$$

- $$Pr\left[I(t+dt) - I(t) > 1\right] = o(dt)$$

    ➢ déterminer l'état *I(t)* de la propagation ou distribution d'un message Mi

    ➢ estimer à cet instant t la probabilité $Pr[I(t + \Delta t) = N|I(t)]$ que tous les noeuds ou entités mobiles i ayant souscrit au service de distribution du message Mi aient reçu le message ou contenu d'information, si on attend un temps ∆t supplémentaire.

En se fixant : une valeur seuil σ, un délai D (égal à Exp(Mi)) pour diffuser un message Mi à l'ensemble des noeuds du réseau, exécuter l'algorithme suivant :

    ➢ estimer m le plus petit nombre de noeuds mobiles qui doivent initialement recevoir le message Mi de sorte que $Pr(I(D) = N|I(0) = m) \geq \sigma$ et faire

à chaque appel de l'algorithme:

- Si $Pr(I(D) = N|I(t) = i) \geq \sigma$ alors ne rien modifier

- Sinon, la probabilité de pouvoir disséminer le message Mi grâce aux m noeuds initiaux est faible, alors chercher le plus petit *nombre k de noeuds* permettant la diffusion du message Mi vers toutes les entités ayant souscrit au service de transmission de Mi, tant que $Pr(I(D) = N|I(t) = i + k) \geq S$, et ajouter k noeuds mobiles à l'ensemble, les k noeuds ajoutés étant choisis au hasard.

Selon un mode de réalisation, chaque noeud i rencontre un autre noeud j selon un processus de Poisson d'intensité $\lambda ij$, et la fonction de dissémination (Mi, $I_{Mi}$,$S_c$) comporte au moins les étapes suivantes Soit $pi(t)$ la probabilité que le noeud i soit infecté à l'instant $t$, et $I(t) = (p_i(t))i$, le nombre de noeuds ayant reçu le message Mi

➤ établir la relation suivante:

$$p_i(t + dt) = p_i(t) + (1 - p_i(t))\left(1 - \prod_{j \neq i}(1 - p_j(t)\lambda_{ij}dt + o(dt))\right)$$
$$= p_i(t) + (1 - p_i(t))\left(\sum_{j \neq i} p_j(t)\lambda_{ij}dt\right) + o(dt)$$

➤ connaissant $I_{Mi}(t)$ (l'état de la propagation du message Mi à l'instant $t$), fixer les valeurs de $p_i(t) \in \{0,1\}$ selon que le noeud 101i a reçu le message Mi ou non,

➤ estimer les $p_i(t + \Delta t |I(t))$,

➤ connaissant $I(t)$, calculer la probabilité de succès de la diffusion du message Mi à tous les noeuds mobiles i à l'instant $t + \Delta t$,

$$Pr_{succ}(t + \Delta t|I(t)) = \prod p_i(t + \Delta t|I(t))$$

Pour que la probabilité qu'un noeud ou entité mobile, reçoive le message Mi dans le délai de vie du message $Pr_{succ}(D) \geq \sigma$, soit en permanence supérieure ou égale à une valeur seuil $\sigma$
répéter toutes les $\Delta T$ secondes 0 l'algorithme suivant :

$$I_{Mi\_old}(t): = I_{Mi}(t)$$

correspond à l'ensemble de noeuds qui ont reçu le message Mi.
Tant que $S_c(t) \neq I_{Mi}(t)$ et $Pr_{succ}(D / I_{Mi}(t)) < \sigma$;

• Pour chaque noeud ou entité mobile s appartenant à l'ensemble des noeuds qui a adhéré ou souscrit au contenu C mais qui n'a pas encore reçu le message, recalculer la valeur de la probabilité $Pr_{succ}(D |I_{Mi}(t))$ en supposant que s est infecté

• Soit $S_{max}$ le noeud qui, lorsqu'il a reçu le message $Mi$, fait le plus augmenter la valeur de la probabilité $Pr_{succ}(D | I_{Mi}(t))$,

• Rajouter $s_{max}$ à l'ensemble des noeuds infectés en faisant $I_{Mi}(t)=I_{Mi}(t) \cup \{s_{max}\}$

Puis diffuser le contenu ou le message $Mi$ vers les noeuds appartenant à l'ensemble $I_{Mi}(t) \setminus I_{Mi\_old}(t)$, c'est-à-dire le nouvel ensemble excluant l'ancien ensemble.
L'estimation des probabilités $p_i(t + \Delta t| I(t))$ est réalisée, par exemple, en résolvant le système

$$\frac{dp_i(t)}{dt} = (1 - p_i(t))\left(\sum_{j \neq i} p_j(t)\lambda_{ij}\right)$$ de manière approchée.

L'invention concerne aussi un système permettant de disséminer un contenu d'informations ou message Mi au sein d'un réseau comprenant une ou plusieurs entités pilotes communiquant avec un ou plusieurs noeuds mobiles ou utilisateurs 101 i communiquant avec au moins une des entités pilotes caractérisé en ce que :

➤ au moins une entité pilote comporte au moins les éléments suivants :

➤ une Base de données des messages Mi à distribuer vers les entités mobiles ou noeuds ayant souscrit à ce type de contenu

➤ un module de courtage maintenant la liste des entités mobiles étant abonnées à un certain type de contenu,

➤ un Module de connaissance et apprentissage de la mobilité desdites entités mobiles,

➤ un module de mesure de l'état des disséminations des messages Mi référencés dans la base de données,

➤ un module de routage,

➤ un module d'ordonnancement des transferts permettant de décider quel(s) sont le ou les message(s) qui doivent être transférés à un instant donné et vers quelle(s) entité(s) mobiles(s) via le réseau d'infrastructure et exécutant les étapes de l'algorithme d'ordonnancement décrit ci-dessus, en utilisant les informations fournies par la base de données, par le module de courtage, par le module de mesure de l'état des disséminations, par le module de routage, et par un module d'apprentissage de la mobilité,

➤ une entité mobile du réseau mobile comprenant au moins les éléments suivants :

o une base de données des messages Mi reçus,
o un module de courtage permettant à une entité mobile de s'enregistrer à un service,
o un module d'ordonnancement des transferts qui permet de décider quel(s) message(s) doivent être transférés et vers quelle(s) entité(s) mobiles.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1a un premier exemple de réseau hybride dans lequel peut être mis en oeuvre le procédé selon l'invention, et la figure 1b un deuxième exemple,
- La figure 2, de manière schématique la boucle de transmission du contenu d'informations selon l'invention,
- La figure 3, les fonctions élémentaires présentes dans un "pilote", et
- La figure 4, la liste des fonctions élémentaires présentes dans un utilisateur mobile du réseau de communication hybride.

Afin de mieux faire comprendre l'objet de la présente invention, l'exemple qui va suivre est donné dans le cadre d'un réseau comprenant une infrastructure (avec son réseau d'accès) ainsi que des utilisateurs fixes et mobiles. Les utilisateurs mobiles 101 i sont par exemple dans un contexte 3G des téléphones portables. L'infrastructure correspond, par exemple, au réseau d'un opérateur de téléphonie mobile et comprend des éditeurs fixés qui sont par exemple des serveurs de contenu hébergés dans le coeur de l'Internet ou dans un réseau coeur du fournisseur d'accès 3G. Dans cet exemple, on considère que les éditeurs de contenu sont également les "pilotes" de sa diffusion.

Sans sortir du cadre de l'invention, il serait possible d'utiliser un utilisateur mobile comme source de contenu et/ou comme "pilote" de sa diffusion.

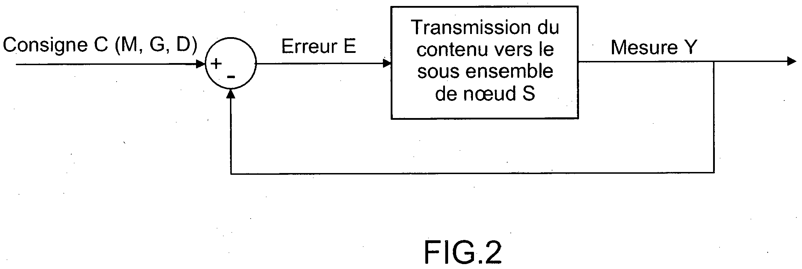

Le procédé utilise notamment une boucle de contrôle, schématisée par exemple à la figure 2, pour disséminer de façon massive le contenu de données ou d'informations à partir d'éditeurs fixes dans l'ossature du réseau vers les utilisateurs mobiles qui ont souscrit audit contenu, en respectant les délais maximaux de livraison associés.

Sur la figure 2 est représentée une boucle comprenant une consigne C ordonnant la livraison d'un contenu de données Mi à un groupe G d'utilisateurs mobiles 101 i dans un délai maximal D correspondant à un délai fixé en fonction des informations à transmettre. De manière itérative, en fonction de l'observation de la distribution ou des livraisons du contenu déjà effectuées au niveau des utilisateurs mobiles, ce qui correspond à la mesure Y sur la figure 2, le procédé selon l'invention détermine l'erreur E relative à la consigne C, afin de décider quel sous-ensemble d'abonnés mobiles qui n'ont pas encore reçu les informations et qui devraient les recevoir, doit recevoir le contenu d'informations via l'ossature du réseau pour respecter la contrainte de délai associée à Mi (contenu d'informations). Dans l'exemple précédent, le contenu à transmettre était le contenu du journal New York Times, avec un délai d'un jour, par exemple, les informations journalières pouvant être considérées comme périmées le jour suivant.

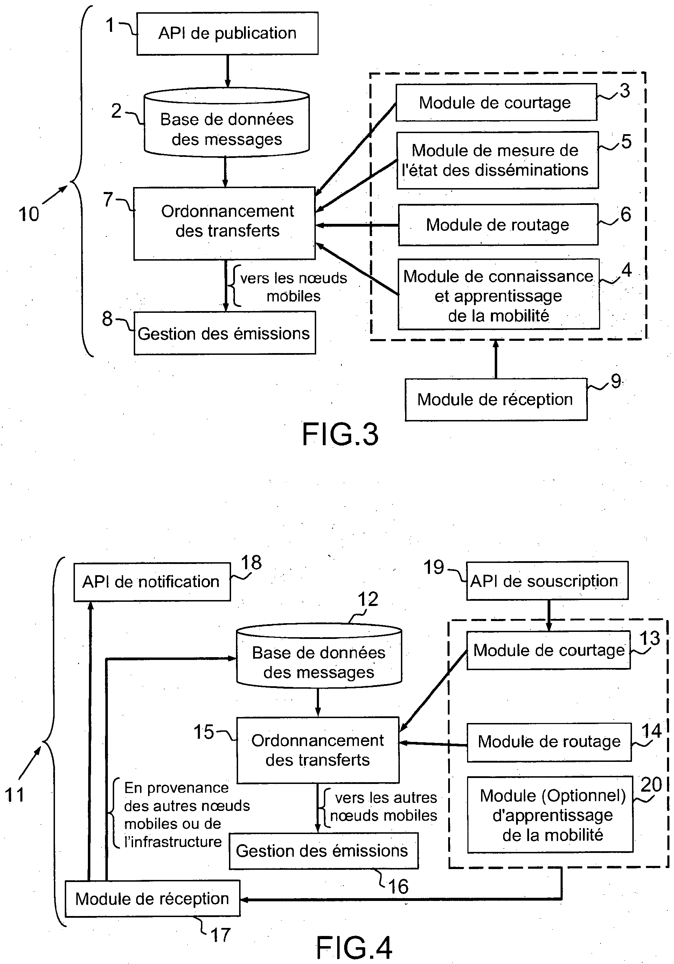

La figure 3 illustre les différents éléments et modules (référencés 10 sur la figure) devant être présents dans chacune des entités "pilotes" qui contrôlent la diffusion des contenus.

API de publication 1 : Cette interface est utilisée par les fournisseurs de contenu pour publier un contenu. Cette interface permet de spécifier les paramètres de qualité de service (QoS en anglais, Quality of Service) associés à la dissémination (e.g, le message Mi n'est plus pertinènt après l'instant T). Afin de caractériser le contenu publié, de nombreuses techniques peuvent être utilisées, comme par exemple l'utilisation de métadonnées ou de topics (par exemple /news/ basket-ball/europe/championship pour les informations concernant les résultats du championnat européen de basket). Cette API permet de passer le message (e.g., intégralité ou sous-partie d'un contenu) à la base de données 2 des messages Mi.

Base de données 2 des messages : Les entités "pilotes" du réseau utilisant le procédé sont munies d'une mémoire ou une base de données leur permettant de stocker les messages Mi à distribuer vers les utilisateurs ayant souscrit à un service donné leur permettant d'obtenir dans un délai donné le contenu des messages Mi. Les messages Mi ayant expiré sont automatiquement effacés de cette base de données, c'est-à-dire que les messages ont une durée de vie ou délai d'expiration, délai à partir duquel, l'information n'a plus de valeur instantanée pour un utilisateur. Ils seront donc éliminés de cette base de données dès que la valeur de l'instant auquel l'utilisateur les reçoit est supérieure au délai d'expiration.

Module de courtage 3: Ce module permet de maintenir la liste des utilisateurs abonnés à un certain contenu, caractérisé comme indiqué précédemment (e.g, en utilisant par exemple des métadonnées ou des topics).

Module 4 de connaissance et apprentissage de la mobilité : Ce module connaît a priori, ou recueille des informations concernant la mobilité (passée ou future) des noeuds mobiles (ces informations peuvent être recueillies en utilisant une cellule GSM Global system Mobile, ou encore des données GPS Global Positioning system) ou concernant leurs interactions (e.g, fréquence des contacts entre deux entités mobiles données, planification de la mobilité d'un utilisateur). Ces informations permettent au module 7 d'ordonnancement des transferts d'optimiser globalement la distribution du contenu de l'information (messages Mi à distribuer dans un délai donné à un utilisateur ayant souscrit).

Module 5 de mesure de l'état des disséminations : Ce module mesure l'état de la dissémination des messages Mi référencés dans la base de données 2 des messages en recevant principalement des notifications de livraison de la part des utilisateurs via l'ossature du réseau. Il récolte les informations sur la livraison ou non du contenu d'informations attendu par un client. Ces informations qui remontent des entités mobiles vers la source du contenu permettent la mise en oeuvre du canal de retour proposé dans ce procédé. Le module peut également demander si besoin ces informations directement aux utilisateurs.

Module de routage 6 : Ce module permet de connaître la meilleure route ou les différentes routes possibles pour joindre un utilisateur donné. C'est cette route ou chemin par lequel les messages Mi seront transmis. Les utilisateurs peuvent être joignables de manière synchrone via l'ossature du réseau; par exemple un chemin IP (Internet Protocol existe), cette information est alors donnée par un protocole de routage IP et des mécanismes de résolution d'adresse (e.g, DNS, méthode ou protocole qui offre la capacité à un dispositif du réseau tel qu'un routeur d'utiliser le protocole « Internet Protocol Suite ». Les utilisateurs peuvent être également joignables de manière asynchrone en utilisant un acheminement opportuniste, cette information est alors donnée par un protocole de routage DTN connu de l'Homme du métier et ayant notamment pour fonction de changer en temps réel des configurations de noms de domaines, d'adresses ou encore d'autres informations.

Ordonnancement 7 des transferts : Ce module permet de décider quel(s) sont le ou les message(s) qui doivent être transférés à un instant donné et vers quelle(s) entité(s) mobiles(s) via l'ossature du réseau. Cette décision est prise en utilisant les informations fournies par la base de données 2 des messages Mi, par le module de courtage 3, par le module de l'état des disséminations 5, par le module de routage 6, ainsi que par le module d'apprentissage de la mobilité 4. L'algorithme d'ordonnancement utilisé par le procédé selon l'invention est explicité dans la suite du document.

Gestion 8 des émissions : Ce module effectue l'émission des messages en provenance du module d'ordonnancement 7 des transferts vers les utilisateurs mobiles 101 i ayant souscrit à un service.

L'algorithme d'ordonnancement peut être implémenté sous une formé logicielle dans une pile de routage applicatif ou de surcouche ou "overlay".

La figure 4 illustre quant à elle les différents modules et éléments (référence 11) présents chez un utilisateur mobile 101 i du réseau mobile.

Base de données 12 des messages : Les utilisateurs mobiles du réseau sont munis d'une mémoire leur permettant de stocker les messages Mi qu'elles ont reçus en transit à redistribuer. Les messages dont le délai de livraison se trouve dans le passé sont automatiquement effacés de cette base de données. On dira de tels messages, qu'ils ont expiré.

Module de courtage 13 : Ce module permet à l'utilisateur mobile de s'enregistrer via l'API de souscription 19 comme souscripteur pour un certain contenu de données caractérisé comme indiqué précédemment (en utilisant par exemple des méta données ou des topics). Ce module garde une connaissance locale des souscriptions du noeud. Les mises à jour sont transmises aux "pilotes" des contenus via l'ossature du réseau.

Module de routage 14: Ce module permet de connaître la route pour joindre des entités via l'ossature mais surtout de découvrir les noeuds à proximité d'un autre noeud en utilisant les capacités de communication ad hoc du réseau mobile par exemple.

Ordonnancement des transferts 15 : Ce module permet de décider quel(s) message(s) doivent être transférés et vers quelle(s) entité(s). Cette décision est prise en utilisant les informations fournies par la base de données 12 des messages, par le module de courtage 13, et par le module de routage 16. L'algorithme utilisé est décrit dans la suite du document.

Gestion des émissions 16 : Ce module effectue les transferts des messages Mi en provenance du module d'ordonnancement des transferts 15 vers les entités mobiles 101 i en portée radio.

Module 17 de réception : Ce module réceptionne les messages en provenance des autres entités puis les stocke dans la base de données des messages 12 si ceux-ci n'ont pas expiré, c'est-à-dire que le message ayant une durée de vie donnée, cette dernière n'est pas périmée. Ce module décide de transférer chaque message Mi reçu vers l'API de notification 10 si l'entité hébergeant le module est abonnée de ce type de messages, cette information est donnée par le module de courtage 13.

API de notification 18 : Cette interface notifie les applications locales ayant souscrit à un contenu de l'arrivée d'un message Mi correspondant à ce type de contenu.

API de souscription 19 : Cette interface permet aux applications locales de souscrire à un certain type de contenu.

Module 20 (Optionnel) d'apprentissage de la mobilité : Ce module recueille des informations concernant la mobilité (passées ou futures) du noeud mobiles (e.g, cellule GSM, données GPS) ou concernant ses interactions avec les autres (e.g, fréquence des contacts entre deux entités mobiles données). Ces informations sont transmises périodiquement aux entités "pilotes" via l'ossature du réseau.

**Algorithme du module d'ordonnancement 7 des transferts**

L'algorithme peut être implémenté sous une forme logicielle dans une pile de "routage" applicatif située dans le module 7 d'une entité de l'ossature.

On considère un réseau de noeuds ou entités mobiles.

Soit $S_C(t)$ l'ensemble des noeuds ayant souscrit au contenu C.

Soit $Mi$ un message correspondant au contenu C.

Soit $I_{Mi}(t)$ le nombre de noeuds infectés, c'est-à-dire ayant reçu le message $Mi$ à l'instant $t$. $I_{Mi}(t)$ est inclus dans $S_c(t)$.

L'algorithme suivant permet au module d'ordonnancement 7 des transferts résidant sur les entités de l'ossature de procéder à la dissémination d'un message Mi appartenant au contenu $C$ :

- Soit ETAT, l'état général du processus de dissémination du message $Mi$. ETAT prenant, par exemple, pour valeur initiale « ENCOURS ».

- Tant que ETAT = « ENCOURS », exécuter toutes les $\Delta T$ secondes les étapes suivantes:

  o Récupérer du module de mesure d'états de la dissémination 5 les états $I_{Mi}(t)$ indiquant à l'instant courant $t$ les noeuds mobiles ou entités du réseau mobile ayant reçu le message $Mi$.
  ∘ Récupérer du module de courtage 3 l'ensemble $S_c(t)$ des utilisateurs mobiles abonnés au contenu de type Type C.
  ∘ Si cardinal $I_{Mi}(t)$ = cardinal $S_C(t)$

    ▪ Mettre ETAT = « ARRENTER »

  o SINON

    ▪ Calculer $Texp(Mi),$ le temps restant avant expiration de $Mi,$

■ Si *Texp(Mi) > 0*, c'est-à-dire qu'il reste du temps avant que le contenu du message *Mi* devienne obsolète,

• Appeler une fonction dénommée « Dissémination (Mi, $I_{Mi}$, $S_C$) » qui va permettre de disséminer ou transmettre le message *Mi* à toutes les entités qui ont souscrit au contenu C.

■ Sinon

• Retirer *Mi* de la base de données 2, le contenu du message *Mi* (informations) est devenu obsolète.

La valeur de $\Delta$T est choisie inférieure au temps d'expiration initial du contenu. Plus elle est petite, plus il est possible de contrôler la dissémination du contenu et la précision de cette dissémination. Si elle est trop petite, le système risque de mal réagir en présence d'erreurs de prédiction sur la mobilité des noeuds.

L'algorithme suivant permet au module d'ordonnancement des transferts 7 résidant sur les utilisateurs mobiles de fonctionner:

• Pour chaque message *Mi* présent dans la base de données 2,

  ∘ Si un utilisateur mobile *101i est* présent dans le voisinage,

    ■ Si *101i* est abonné au contenu de type(*Mi*),

      • Transférer le message *Mi* à l'utilisateur mobile *101i*

**Fonction « Dissémination (Mi, $I_{Mi}$, $S_C$) »**

On cherche à assurer la diffusion du message *Mi à* l'ensemble $S_C$ des souscripteurs du contenu *C* dans le délai imparti, sachant que les noeuds dans $I_{Mi}$ ont déjà le message.

On considère le réseau constitué des *N* noeuds ayant souscrit au contenu *C* à l'instant *t. N=cardinal($S_c(t)$)*

Deux manières de mettre en oeuvre l'algorithme vont être explicitées.

**Cas homogène**

Le premier cas suppose qu'un noeud ou entité mobile rencontre un autre noeud selon un même processus d'inter-arrivée des contacts suivant une loi de Poisson d'intensité $\lambda$.

Comme tous les noeuds sont interchangeables, il suffit dans ce premier exemple de mise en oeuvre de connaître le nombre de noeuds infectés *i(t) = cardinal ($I_{Mi}(t)$)*, pour caractériser l'état de la propagation de l'épidémie ou dissémination du contenu ou d'un message. *i(t)* est à valeurs dans *{1,2,..,N}*.

*i(t)* évolue selon un processus de poisson non homogène. En effet, lorsque *i(t)* noeuds sont infectés, c'est-à-dire qu'ils ont reçu le message *Mi,* et *N-i(t)* sont sains, ce qui correspond à des entités mobiles qui n'ont pas encore reçue le message *Mi,* il y a un nombre égal à *i(t)[N-i(t)]* possibilités de rencontres entre les noeuds mobiles *101i* qui peuvent ajouter un noeud à l'ensemble $I_{Mi}(t)$ des noeuds ayant reçu le message *Mi*.

Ce qui conduit à la probabilité pour qu'un noeud ou entité mobile n'ayant pas encore reçu le message le reçoive :

$$\cdot \quad Pr\left[i(t+dt) - i(t) = 1\right] = \lambda i(t)\left[N - i(t)\right] dt + o(dt)$$

$$\cdot \quad Pr\left[i(t+dt) - i(t) > 1\right] = o(dt)$$

o(t) est une notation classique mathématique dans le cadre d'un développement limité. Ces expressions mathématiques permettent d'expliquer les éléments théoriques sous jacent à l'implémention du procédé décrit dans le paragraphe relatif à l'algorithme de dissémination avec rétroaction..

La succession des états d'infection (un état indique à un instant courant t le nombre de noeuds mobiles ayant un message Mi) forme une chaîne de Markov à temps continu. L'intensité de transition entre l'état *i(t) = k état pour lequel k noeuds mobiles ont reçu le message Mi et I(t + dt) = k + 1, état pour lequel (k+1) noeuds ont reçu le message Mi* est: *$\lambda k = \lambda k(N - k)$*. Ce qui correspond à la matrice de transition suivante:

$$\mathbf{Q} = \begin{bmatrix} -\lambda_1 & \lambda_1 & & & 0 \\ & -\lambda_2 & \lambda_2 & & \\ & & \ddots & \ddots & \\ & & & -\lambda_{N-1} & \lambda_{N-1} \\ 0 & & & & 1 \end{bmatrix}$$

Soit $\pi(t)$ le vecteur d'état de cette chaîne de Markov:

$$\pi(t+dt) = \pi(t)\left(\mathbf{I_N} + \mathbf{Q}dt + o(dt)\right)$$

Ce qui donne le vecteur $\pi(t + \Delta t) = \pi(t)e^{Q\Delta t}$

Au bout d'un temps $\Delta t$, il y aura en moyenne $E(i(t + \Delta t)) = [1\ 2\ ...\ N] \cdot \pi(t + \Delta t)$ noeuds infectés, c'est-à-dire qui auront reçu un message Mi.

**Algorithme de diffusion avec rétroaction**

Une mesure de l'état de la propagation ou distribution d'un message fournit l'état $I_{Mi}(t)$ (et donc la valeur de $i(t)$ et du vecteur $\pi(t)$ avec des 0 partout sauf pour l'état courant qui vaut 1. Il est alors possible d'estimer à cet instant la probabilité $Pr[i(t + \Delta t) = N|i(t)]$ que tous les noeuds ou entités mobiles ayant souscrit au service de distribution du message Mi aient reçu le message ou contenu d'information, si on attend un temps $\Delta t$ supplémentaire. En se fixant :

- un seuil $\sigma$ (par ex 95%)

- un délai $D$ (égal à $Exp(Mi)$) pour diffuser un message $Mi$ à l'ensemble des noeuds du réseau

Au premier appel de l'algorithme de diffusion avec rétroaction le plus petit nombre $m$ de noeuds mobiles qui doivent initialement recevoir le message $Mi$ de sorte que $Pr(i(D) = N|i(t) = m) \geq \sigma$ est estimé (probabilité que le seuil de propagation soit suffisant/totalité de la période, $D$ est la valeur de la deadline) ; $m$ correspond au nombre de noeuds mobiles ayant initialement reçu le message $Mi$.

A chaque appel de l'algorithme:

- Si $Pr(i(D) = N|i(t) = n) \geq \sigma$ alors on ne fait rien, la probabilité de disséminer le message $Mi$ à l'aide des n noeuds infectés à l'instant $t$ est satisfaisante.

- Sinon, la probabilité de pouvoir disséminer le message $Mi$ grâce aux $n$ noeuds actuellement infectés est trop faible. On cherche alors le plus petit *nombre k de noeuds* supplémentaires permettant la diffusion du message Mi vers toutes les entités ayant souscrit au contenu $C$ avec une probabilité satisfaisante. On cherche donc le plus petit $k$ tel que : $Pr(i(D) = N|i(t) = n + k) \geq \sigma$. Finalement on choisi au hasard $k$ noeuds non infectés auxquels on distribue chacun une copie du message $Mi$ en passant par l'infrastructure.

## **Cas non homogène**

**Estimation de la probabilité de succès de la diffusion**

Chaque noeud i rencontre un autre noeud j selon un processus de Poisson d'intensité $\lambda ij$, *ce qui conduit à $\lambda ij = \lambda ji$ et $\lambda ii = 0$.*

Soit $p_i(t)$ la probabilité que le noeud i soit infecté à l'instant $t$, et *la suite $(p_i(t))_i$* caractérise notre connaissance de la propagation de l'épidémie. La relation suivante est établie:

$$p_i(t+dt) \;=\; p_i(t) + (1 - p_i(t))\left(1 - \prod_{j\neq i}(1 - p_j(t)\lambda_{ij}dt + o(dt))\right)$$
$$\;=\; p_i(t) + (1 - p_i(t))\left(\sum_{j\neq i} p_j(t)\lambda_{ij}dt\right) + o(dt)$$

Ce qui donne le système d'équations différentielles suivant:

$$\frac{dp_i(t)}{dt} = (1 - p_i(t))\left(\sum_{j\neq i} p_j(t)\lambda_{ij}\right)$$

Connaissant $I_{Mi}(t)$, on fixe les valeurs de $p_i(t) \in \{0, 1\}$ selon que le noeud mobile *101i* est infecté ou non. On peut alors estimer les $p_i(t+ \Delta t \mid I_{Mi}(t))$ en résolvant le système de façon approchée (en utilisant, par exemple, la méthode RK4 de Runge-Kutta [RK4 connue de l'homme de métier]).

Finalement, connaissant $I(t)$, il est possible de calculer la probabilité de succès de la diffusion d'un message Mi à tous les noeuds à l'instant t+ $\Delta t$.

$$Pr_{succ}(t + \Delta t \mid I_{Mi}(t)) = \prod p_i(t + \Delta t \mid I_{Mi}(t))$$

ce qui correspond à la probabilité que des noeuds reçoivent le message Mi à diffuser. La notation $\Delta t \mid I_{Mi}(t)$ correspond à la Probabilité qu'à t+$\Delta t$ sachant que $I_{Mi}(t)$ sont déjà infecté, tous les noeuds soient infectés.

**Algorithme rétroactif glouton pour contrôler la diffusion dans le cas non homogène**

Initialement, l'ensemble des noeuds mobiles ayant reçu le message *Mi*, $I_{Mi}(t=0),$ est l'ensemble vide.
Comme dans le modèle simplifié, on se fixe par exemple:

- un seuil $\sigma$ (par ex 95%)
- un délai *D* (égal à *Exp(Mi)*) pour diffuser un message à l'ensemble des noeuds du réseau

On veut en permanence assurer que $Pr_{succ}(D) \geq \sigma$. C'est-à-dire qu'en permanence, on veut que la probabilité qu'un noeud ou entité mobile reçoive le message Mi dans le délai de vie du message soit supérieur à une valeur seuil. Cette valeur seuil est choisie en fonction de l'information contenue dans le message Mi. C'est une donnée d'entrée au processus de dissémination ; c'est la tolérance au fait qu'un certain nombre de noeuds ne soient pas infectés à la fin.
Pour cela, on va utiliser l'algorithme glouton suivant (répété toutes les $\Delta$T secondes):

$$I_{Mi\_old}(t) := I_{Mi}(t)$$

correspond à l'ensemble de noeuds qui ont reçu le message Mi.
Tant que $S_C(t) \neq I_{Mi}(t)$ et $Pr_{succ}(D / I_{Mi}(t)) < \sigma$, tant que tous les utilisateurs n'ont pas reçu le message *Mi* et que la probabilité qu'un noeud ou entité mobile reçoive le message *Mi* dans le délai de vie du message est inférieur à une valeur seuil $\sigma$

- Pour chaque noeud ou entité mobile s appartenant à l'ensemble des noeuds qui a adhéré ou souscrit au contenu *C* mais qui n'a pas encore reçu le message, recalculer la valeur de la probabilité $Pr_{succ}(D \mid I_{Mi}(t))$ en supposant que s est infecté

- Soit $S_{max}$ le noeud qui, lorsqu'il a reçu le message *Mi,* fait le plus augmenter la valeur de la probabilité $Pr_{succ}(D \mid I_{Mi}(t))$,

- Rajouter $S_{max}$ à l'ensemble des noeuds infectés en faisant $I_{Mi}(t) = I_{Mi}(t) \, U\{S_{max}\}$

Puis diffuser le contenu ou le message *Mi* vers les noeuds appartenant à l'ensemble $I_{Mi}(t) \setminus I_{Mi\_old}(t)$, c'est-à-dire le nouvel ensemble excluant l'ancien ensemble.

Le procédé utilise des informations concernant les interactions entre les noeuds (par exemple la mobilité des noeuds, la fréquence de leurs rencontres) afin de minimiser le nombre de noeuds mobiles qui reçoivent le contenu de la part du service de distribution du contenu via l'ossature du réseau (3G ou VHF par exemple) tout en garantissant un délai maximal de livraison.

Ce procédé permet notamment de réduire les communications radio en minimisant les informations échangées entre l'ossature du réseau et les noeuds mobiles. Ceci présente notamment des intérêts en termes de discrétion, d'augmentation de la durée de vie du réseau, de réduction des coûts, de gain en capacité globale du réseau.

Le procédé selon l'invention est robuste aux erreurs de prédiction liées au fait que la mobilité des noeuds n'est le plus souvent pas déterministe. La boucle fermée de contrôle permet un réajustement régulier du processus afin qu'il satisfasse le résultat attendu dans tous les cas.

**Revendications**

1. Procédé pour disséminer un message Mi dans un réseau dit hybride comprenant une ou plusieurs entités pilotes (103k, 111 k), une entité pilote comprenant au moins une base de données (2) de messages à disséminer, un module d'ordonnancement (7) des transferts des messages, un module de courtage (3), un module de mesure (5) de l'état de dissémination des messages Mi et un réseau mobile (200) composé de N noeuds utilisateur mobiles (101 i, 107j) ou Ui, lesdits noeuds mobiles communiquant entre eux lorsqu'ils sont en portée radio, lesdites entités pilotes (103k, 111k) communiquant avec les entités utilisateur mobiles (101i) du réseau mobile le processus gérant les rencontres entre deux noeuds utilisateurs mobiles suit une loi de Poisson d'intensité λ, le procédé comportant au moins les étapes suivantes:

➢ Au niveau de chacune des entités pilotes (103k, 111k) du réseau, exécuter un algorithme d'ordonnancement des transferts d'au moins un message Mi en exécutant les étapes suivantes:

➢ Soit $S_C(t)$ l'ensemble des noeuds mobiles ayant souscrit au contenu de type $C$.

➢ Soit $Mi$ un message correspondant au contenu de type $C$,

➢ Pour chaque message $Mi$ contenu dans la base de données (2), si un noeud utilisateur mobile (101i) est présent dans le voisinage d'une entité pilote, alors si l'entité utilisateur mobile (101i) est abonnée au contenu de type Mi, transférer le message Mi audit utilisateur mobile (101i),
Soit $I_{Mi}(t)$ l'ensemble de noeuds ayant reçu un message Mi contenant des informations dans le réseau à l'instant $t$:

• Soit ETAT, l'état général du processus de dissémination du message Mi, ETAT prenant une valeur initiale « ENCOURS »,
• Tant que ETAT = « ENCOURS », exécuter toutes les ΔT secondes les étapes suivantes:

○ Récupérer du module de mesure d'états de la dissémination (5) les états $I_{Mi}(t)$ indiquant à l'instant courant $t$ les noeuds mobiles ou entités du réseau mobile ayant reçu le message $Mi$,.
○ Récupérer du module de courtage (3) l'ensemble $S_c(t)$ des utilisateurs mobiles abonnés au contenu de type Type C.
○ Si cardinal $I_{Mi}(t)$ = cardinal $S_c(t)$

■ Mettre ETAT = « ARRETER »

○ SINON

■ Calculer Texp(Mi), le temps restant avant expiration de Mi
■ Si Texp(Mi) > 0, c'est-à-dire qu'il reste du temps avant que le contenu du message Mi devienne obsolète,

• Appeler une fonction « Dissémination(Mi,$I_{Mi}$,$S_C$) » qui va permettre de disséminer ou transmettre le message $Mi$ à toutes les entités qui ont souscrit au contenu de type $C$.

■ Sinon

• Retirer Mi de la base de données (2), le contenu du message Mi (informations) est devenu obsolète.

**2.** Procédé selon la revendication 1. **caractérisé en ce que** la fonction de dissémination (Mi, $I_{Mi}$, $S_c$) comporte au moins les étapes suivantes:

la probabilité pour qu'un noeud ou entité utilisateur mobile (101i) n'ayant pas encore reçu le message le reçoive est donnée par :

$$\cdot\ Pr\left[I(t+dt)-I(t)=1\right]=\lambda I(t)\left[N-I(t)\right]dt+o(dt)$$

$$\cdot\ Pr\left[I(t+dt)-I(t)>1\right]=o(dt)$$

➢ déterminer l'état $I(t)$ de la propagation ou distribution d'un message Mi

➢ estimer à cet instant t la probabilité $Pr[I(t+\Delta t)=N|I(t)]$ que tous les noeuds ou entités utilisateur mobiles (101i) ayant souscrit au service de distribution du message Mi aient reçu le message ou contenu d'information, si on attend un temps $\Delta t$ supplémentaire.

En se fixant : une valeur seuil $\sigma$, un délai D (égal à Exp(Mi)) pour diffuser un message Mi à l'ensemble des noeuds du réseau, exécuter l'algorithme suivant :

➢ estimer m le plus petit nombre de noeuds mobiles qui doivent initialement recevoir le message Mi de sorte que $Pr(I(D)=N|I(0)=m)\geq\sigma$ et faire

à chaque appel de l'algorithme:

• Si $Pr(I(D)=N|I(t)=i)\geq\sigma$ alors ne rien modifier
• Sinon, la probabilité de pouvoir disséminer le message Mi grâce aux m noeuds initiaux est faible, alors chercher le plus petit *nombre k de noeuds* permettant la diffusion du message Mi vers toutes les entités ayant souscrit au service de transmission de Mi, tant que $Pr(I(D)=N|I(t)=i+k)\geq S$, et ajouter k noeuds mobiles à l'ensemble, les k noeuds ajoutés étant choisis au hasard.

**3.** Procédé selon la revendication 1 **caractérisé en ce que** la fonction de dissémination (Mi, $I_{Mi}$, $S_c$) comporte au moins les étapes suivantes :

Soit $p_i(t)$ la probabilité que le noeud i soit infecté à l'instant *t*, et $I(t)=(p_i(t))i$, *le nombre de noeuds ayant reçu le message Mi*

➢ établir la relation suivante:

$$p_i(t+dt)\ =\ p_i(t)+(1-p_i(t))\left(1-\prod_{j\neq i}(1-p_j(t)\lambda_{ij}dt+o(dt))\right)$$
$$=\ p_i(t)+(1-p_i(t))\left(\sum_{j\neq i}p_j(t)\lambda_{ij}dt\right)+o(dt)$$

connaissant $I_{Mi}(t)$ (l'état de la propagation du message Mi à l'instant t), fixer les valeurs de $p_i(t)\in\{0,1\}$ selon que le noeud (101i) a reçu le message Mi ou non,

➢ estimer les $p_i(t+\Delta t|\ I(t))$,
connaissant $I(t)$, calculer la probabilité de succès de la diffusion du message Mi à tous les noeuds utilisateur mobiles (101i) à l'instant $t+\Delta t$,

$$Pr_{succ}(t+\Delta t|I(t))=\prod p_i(t+\Delta t|I(t))$$

Pour que la probabilité qu'un noeud ou entité mobile reçoive le message Mi dans le délai de vie du message $Pr_{succ}(D)\geq\sigma$ soit en permanence supérieure ou égale à une valeur seuil $\sigma$

➢ répéter toutes les ΔT secondes l'algorithme suivant :

$$I_{Mi\_old}(t): = I_{Mi}(t)$$

correspond à l'ensemble de noeuds qui ont reçu le message Mi.
Tant que $S_c(t) \neq I_{Mi}(t)$ et $Pr_{succ}(D \mid I_{Mi}(t)) < \sigma$,

- Pour chaque noeud ou entité mobile s appartenant à l'ensemble des noeuds qui a adhéré ou souscrit au contenu $C$ mais qui n'a pas encore reçu le message, recalculer la valeur de la probabilité $Pr_{succ}(D \mid I_{Mi}(t))$ en supposant que $s$ est infecté
- Soit $s_{max}$ le noeud qui, lorsqu'il a reçu le message $Mi$, fait le plus augmenter la valeur de la probabilité $Pr_{succ}(D \mid I_{Mi}(t))$,
- Rajouter $s_{max}$ à l'ensemble des noeuds infectés en faisant

$$I_{Mi}(t) = I_{Mi}(t) \cup \{s_{max}\}$$

puis diffuser le contenu ou le message $Mi$ vers les noeuds appartenant à l'ensemble $I_{Mi}(t) \setminus I_{Mi\_old}(t)$, c'est-à-dire le nouvel ensemble excluant l'ancien ensemble.

4. Procédé selon la revendication 3 **caractérisé en ce que** l'estimation des probabilités $p_i(t + \Delta t \mid I(t))$ est réalisée en résolvant le système $\dfrac{dp_i(t)}{dt} = (1 - p_i(t)) \left( \sum_{j \neq i} p_j(t) \lambda_{ij} \right)$ de manière approchée.

5. Système permettant de disséminer un message Mi au sein d'un réseau comprenant une ou plusieurs entités pilotes (103k, 111k) communiquant avec un ou plusieurs noeuds mobiles ou utilisateurs (101 i) communiquant avec au moins une des entités pilotes, le système comportant:

- au moins une entité pilote (103k, 111k) comporte au moins les éléments suivants :
- une Base de données (2) des messages Mi à distribuer vers les entités mobiles ou noeuds ayant souscrit à ce type de contenu
- un module de courtage (3) maintenant la liste des entités utilisateur mobiles (101 i) étant abonnées à un certain type de contenu,
- un Module de connaissance et apprentissage de la mobilité (4) desdites entités mobiles,
- un module (5) de mesure de l'état des disséminations des messages Mi référencés dans la base de données (2),
- un module de routage (6),
- un module d'ordonnancement des transferts (7) permettant de décider quel(s) sont le ou les message(s) qui doivent être transférés à un instant donné et vers quelle(s) entité(s) mobiles(s) via le réseau d'infrastructure et exécutant les étapes de l'algorithme d'ordonnancement selon la revendication 1, en utilisant les informations fournies par la base de données (2), par le module de courtage (3), par le module (5) de mesure de l'état des disséminations, par le module de routage (6), et par un module (4) d'apprentissage de la mobilité,
- une entité utilisateur mobile (101i) du réseau mobile comprenant au moins les éléments suivants :
- une base de données (12) des messages Mi reçus,
- un module de courtage (13) permettant à une entité mobile de s'enregistrer à un service,
- un module d'ordonnancement des transferts (15) qui permet de décider quel(s) message(s) doivent être transférés et vers quelle(s) entité(s) mobiles (101i).

6. Système selon la revendication 5 **caractérisé en ce qu'**une entité utilisateur (101 i, 107i) comporte une radio UHF, Ultra High Frequency, courte portée mais haut débit (108) et/ou une radio radio VHF, Very High Frequency, longue portée mais à faible débit.

7. Système selon la revendication 5 **caractérisé en ce qu'**une entité mobile communique avec une entité pilote via une station de base, ladite communication entre une entité utilisateur et une station de base s'effectuant via des liaisons GPRS ou UMTS et une station de base communique avec une entité pilote via des liaisons Ethernet, FH, ou Giga Wireless.

8. Système selon la revendication 5 **caractérisé en ce qu'**une entité utilisateur communique avec une première station de base, puis vers une station de base en utilisant des liaisons radio VHF.

**Patentansprüche**

1. Verfahren zum Verbreiten einer Nachricht Mi in einem hybriden Netz, umfassend eine oder mehrere Piloteinheiten (103k, 111k), wobei eine Piloteinheit mindestens eine Datenbank (2) mit zu verbreitenden Nachrichten, ein Planungsmodul (7) der Nachrichtentransfers, ein Vermittlungsmodul (3), ein Messmodul (5) des Verbreitungszustands der Nachrichten Mi und ein mobiles Netz (200), zusammengesetzt von N mobilen Nutzerknoten (101i, 107j) oder Ui umfasst, wobei die mobilen Knoten untereinander kommunizieren, wenn sie in Funkreichweite sind, wobei die Piloteinheiten (103k, 111k) mit den mobilen Nutzereinheiten (101i) des mobilen Netzes kommunizieren, wobei das Verfahren, das die Begegnungen zwischen zwei mobilen Nutzerknoten verwaltet, einer Poisson-Intensitätsverteilung folgt, wobei das Verfahren mindestens die folgenden Schritte aufweist:

im Bereich jeder der Piloteinheiten (103k, 111k) des Netzes, Durchführen eines Planungsalgorithmus der Transfers von mindestens einer Nachricht Mi mittels Durchführen der folgenden Schritte:

entweder $S_C(t)$, wobei die Gesamtheit der mobilen Knoten den Inhalt vom Typ C abonniert hat,
oder *Mi*, wobei eine Nachricht dem Inhalt vom Typ C entspricht,
für jede Nachricht *Mi,* die in der Datenbank (2) enthalten ist, wenn ein mobiler Nutzerknoten (101i) in der Nähe einer Piloteinheit vorhanden ist, also wenn die mobile Nutzereinheit (101i) den Inhalt vom Typ Mi abonniert hat, Übertragen der Nachricht Mi an den mobilen Nutzer (101i),
oder $I_{Mi}(t)$, wobei die Gesamtheit der Knoten, die eine Nachricht Mi empfangen hat, enthaltend Informationen im Netz zum Zeitpunkt *t*:

entweder STATE als allgemeiner Zustand des Verbreitungsverfahrens der Nachricht Mi, wobei STATE einen Anfangswert "OUTSTANDING" annimmt,
solange STATE = "OUTSTANDING", Durchführen alle $\Delta$T Sekunden der folgenden Schritte:

Abrufen vom Messmodul der Verbreitungszustände (5) die Zustände $I_{Mi}(t)$, die zum aktuellen Zeitpunkt *t* die mobilen Knoten oder Einheiten des mobilen Netzes angeben, die die Nachricht *Mi* empfangen haben,
Abrufen vom Vermittlungsmodul (3) die Gesamtheit $S_C(t)$ der mobilen Nutzer, die den Inhalt vom Typ C abonniert haben,
wenn Kardinalzahl $I_{Mi}(t)$ = Kardinalzahl $S_C(t)$
Setzen STATE = "STOP"
anderenfalls
Berechnen Texp(Mi), die Restzeit vor Ablauf von Mi
wenn Texp(Mi) > 0, das heißt, es ist noch Zeit vorhanden, bevor der Inhalt der Nachricht Mi obsolet wird,
Aufrufen einer "Verbreitungsfunktion (Mi, $I_{Mi}$, $S_C$)", die erlaubt, die Nachricht *Mi* an alle Einheiten zu verbreiten oder zu übertragen, die den Inhalt vom Typ C abonniert haben,
anderenfalls
Entfernen von Mi aus der Datenbank (2), der Inhalt der Nachricht Mi (Informationen) ist obsolet geworden.

2. Verfahren nach Anspruch 1, **dadurch gekennzeichnet, dass** die Verbreitungsfunktion (Mi, $I_{Mi}$, $S_C$) mindestens die folgenden Schritte aufweist:

die Wahrscheinlichkeit dafür, dass ein Knoten oder eine mobile Nutzereinheit (101i), die die Nachricht noch nicht erhalten hat, sie erhält, ist gegeben durch:

$$\cdot Pr\left[I(t+dt) - I(t) = 1\right] = \lambda I(t)\left[N - I(t)\right]dt + o(dt)$$

$$\cdot\ Pr\left[I(t+dt) - I(t) > 1\right] = o(dt)$$

Bestimmen des Zustands $I(t)$ der Verbreitung oder Verteilung einer Nachricht Mi
Schätzen, zu diesem Zeitpunkt $t$, der Wahrscheinlichkeit $Pr\left[I(t + \Delta t) = N|\ I(t)|\right.$, dass alle Knoten oder mobilen Nutzereinheiten (101i), die den Verteilungsdienst der Nachricht Mi abonniert haben, die Nachricht oder den Inhalt der Information erhalten haben, wenn man eine zusätzliche Zeit $\Delta t$ wartet.
Bei Fixierung: eines Grenzwerts $\sigma$, einer Frist D (gleich Exp(Mi)) zum Verbreiten einer Nachricht Mi an die Gesamtheit der Knoten des Netzes, Durchführen des folgenden Algorithmus:

Schätzen von m als kleinste Anzahl mobiler Knoten, die anfänglich die Nachricht Mi erhalten müssen, so dass $Pr\ (I(D) = N|I(0) = m) \geq \sigma$ und bei jedem Aufruf des Algorithmus durchführen:

wenn, $Pr\ (I(D) = N|I(t) = i) \geq \sigma$, keine Änderung
anderenfalls, wenn die Wahrscheinlichkeit, die Nachricht Mi mit den m Anfangsknoten zu verteilen gering ist, Ermitteln der kleinsten *Knotenanzahl k*, die die Verbreitung der Nachricht Mi an alle Einheiten erlaubt, die den Übertragungsdienst von Mi abonniert haben, solange $Pr(I(D) = N|I(t) = i + k) \geq S$, und Hinzufügen von k mobilen Knoten der Gesamtheit, wobei die hinzugefügten k Knoten nach dem Zufallsprinzip ausgewählt sind.

3. Verfahren nach Anspruch 1, **dadurch gekennzeichnet, dass** die Verbreitungsfunktion (Mi, $I_{Mi}$, $S_C$) mindestens die folgenden Schritte aufweist:

entweder $p_i(t)$ als Wahrscheinlichkeit, dass der Knoten zum Zeitpunkt t infiziert ist, und $I(t) = (p_i(t))i$ *als Anzahl der Knoten, die die Nachricht Mi erhalten haben*
Aufstellen der folgenden Gleichung:

$$p_i(t + dt) \quad = \quad p_i(t) + (1 - p_i(t))\left(1 - \prod_{j\neq i}(1 - p_j(t)\lambda_{ij}dt + o(dt))\right)$$
$$= \quad p_i(t) + (1 - p_i(t))\left(\sum_{j\neq i}p_j(t)\lambda_{ij}dt\right) + o(dt)$$

wobei $I_{Mi}(t)$ bekannt ist (Verbreitungszustand der Nachricht Mi zum Zeitpunkt t), Festlegen der Werte von $_{pi}(t) \in \{0, 1\}$, je nachdem, ob der Knoten (101i) die Nachricht Mi erhalten hat oder nicht,
Schätzen der $pi(t + \Delta t\ |\ I(t))$,
wobei $I(t)$ bekannt ist, Berechnen der Erfolgswahrscheinlichkeit der Verbreitung der Nachricht Mi an alle mobilen Nutzerknoten (101i) zum Zeitpunkt $t + \Delta t$,

$$Pr_{succ}(t + \Delta t|I(t)) = \prod p_i(t + \Delta t|I(t))$$

damit die Wahrscheinlichkeit, dass ein Knoten oder eine mobile Einheit die Nachricht Mi innerhalb der Lebenszeit der Nachricht $Pr_{succ}(D) \geq \sigma$ erhält, ständig höher oder gleich einem Grenzwert $\sigma$ ist
Wiederholen alle $\Delta T$ Sekunden des folgenden Algorithmus:
$I_{Mi\_old}(t){:} = I_{Mi}(t)$, was der Gesamtheit der Knoten entspricht, die die Nachricht Mi erhalten haben
solange $Sc(t) \neq I_{Mi}(t)$ und $Pr_{succ}(D\ |\ I_{Mi}(t)) < \sigma$,
für jeden Knoten oder jede mobile Einheit s, die zu der Gesamtheit der Knoten gehört, die dem Inhalt C beigetreten sind oder ihn abonniert haben, aber die Nachricht noch nicht erhalten hat, Neuberechnen des Werts der Wahrscheinlichkeit $Pr_{succ}(D\ |\ I_{Mi}(t))$ unter der Annahme, dass $s$ infiziert ist
oder $S_{max}$ als Knoten, der, wenn er die Nachricht *Mi* erhalten hat, den Wert der Wahrscheinlichkeit $Pr_{succ}(D\ |\ I_{Mi}(t))$ am meisten erhöht,
Hinzufügen von $s_{max}$ zur Gesamtheit der infizierten Knoten mittels $I_{Mi}(t)=I_{Mi}(t)\ U\ \{s_{max}\}$
danach Verbreiten des Inhalts oder der Nachricht *Mi* an die Knoten, die zur Gesamtheit $I_{Mi}(t)\backslash\ I_{Mi\_old}(t)$ gehören, das heißt, der neuen Gesamtheit, die die alte Gesamtheit ausschließt.

4. Verfahren nach Anspruch 3, **dadurch gekennzeichnet, dass** die Schätzung der Wahrscheinlichkeiten $pi(t + \Delta t\ |$

$I(t)$) durch näherungsweises Lösen des Systems $\frac{dp_i(t)}{dt} = (1 - p_i(t)) \left( \sum_{j \neq i} p_j(t) \lambda_{ij} \right)$ durchgeführt wird.

5. System, das erlaubt, eine Nachricht Mi in einem Netz zu verbreiten, das eine oder mehrere Piloteinheiten (103k, 111k) umfasst, die mit einem oder mehreren mobilen Knoten oder Nutzern (101i) kommunizieren, die mit mindestens einer der Piloteinheiten kommunizieren, wobei das System aufweist:

mindestens eine Piloteinheit (103k, 111k), die mindestens die folgenden Elemente aufweist:

eine Datenbank (2) der an die mobilen Einheiten oder Knoten, die diesen Typ von Inhalt abonniert haben, zu verteilenden Nachricht Mi
ein Vermittlungsmodul (3) mit der Liste der mobilen Nutzereinheiten (101i), die einen bestimmten Typ von Inhalt abonniert haben,
ein Kenntnis- und Lernmodul der Mobilität (4) der mobilen Einheiten,
ein Messmodul (5) des Verbreitungszustands der in der Datenbank (2) geführten Nachrichten Mi,
ein Routingmodul (6),
ein Transfer-Planungsmodul (7), das erlaubt zu entscheiden, welche Nachricht(en) über das Infrastrukturnetz zu einem bestimmten Zeitpunkt zu übertragen sind und an welche mobile Einheit(en) und die Schritte des Planungsalgorithmus nach Anspruch 1 unter Nutzung der von der Datenbank (2), von dem Vermittlungsmodul (3), von dem Messmodul (5) des Verbreitungszustands, von dem Routingmodul (6) und von dem Mobilitätslernmodul (4) bereitgestellten Informationen ausführt,
eine mobile Nutzereinheit (101i) des mobilen Netzes, umfassend mindestens die folgenden Elemente:

eine Datenbank (12) der empfangenen Nachrichten Mi,
ein Vermittlungsmodul (13), das es einer mobilen Einheit erlaubt, sich für einen Dienst zu registrieren,
ein Transfer-Planungsmodul (15), das erlaubt zu entscheiden, welche Nachricht(en) zu übertragen sind und an welche mobile Einheit(en) (101i).

6. System nach Anspruch 5, **dadurch gekennzeichnet, dass** eine Nutzereinheit (101i, 107i) eine UHF-Funkverbindung, Ultra High Frequency, kurzer Reichweite, aber mit hoher Leistung (108) und/oder eine VHF-Funkverbindung, Very High Frequency, langer Reichweite, aber mit schwacher Leistung, aufweist.

7. System nach Anspruch 5, **dadurch gekennzeichnet, dass** eine mobile Einheit mit einer Piloteinheit über eine Basisstation kommuniziert, wobei die Kommunikation zwischen der Nutzereinheit und einer Basisstation über die GPRS- oder UMTS-Verbindungen erfolgt und eine Basisstation mit einer Piloteinheit über Ethernet-, FH-oder Giga-Wireless-Verbindungen kommuniziert.

8. System nach Anspruch 5, **dadurch gekennzeichnet, dass** eine Nutzereinheit mit einer ersten Basisstation kommuniziert, danach in Richtung einer Basisstation unter Nutzung der VHF-Funkverbindungen.

## Claims

1. A method for disseminating a message Mi in a so-called hybrid network comprising one or more pilot entities (103k, 111 k), a pilot entity comprising at least one database (2) of messages to be disseminated, a module (7) for scheduling the transfers of the messages, a brokerage module (3), a module (5) for measuring the state of dissemination of the messages Mi and a mobile network (200) composed of N mobile user nodes (101 i, 107j) or Ui, said mobile nodes communicating with one another when they are in radio range, said pilot entities (103k, 111 k) communicating with the mobile user entities (101 i) of the mobile network, the process managing the encounters between two mobile user nodes follows a Poisson law of intensity $\lambda$, the method comprising at least the following steps:

➤ at the level of each of the pilot entities (103k, 111 k) of the network, execute an algorithm for scheduling the transfers of at least one message Mi by executing the following steps:

➤ Let $S_C(t)$ be the set of mobile nodes that have subscribed to the content of type C.

➤ Let $Mi$ be a message corresponding to the content of type C,

➤ For each message *Mi* contained in the database (2), if a mobile user node (101 i) is present in the neighborhood of a pilot entity, then if the mobile user entity (101 i) is subscribed to the content of type Mi, transfer the message Mi to said mobile user (101 i),

➤ Let $I_{Mi}(t)$ be the set of nodes that have received a message Mi containing information in the network at the instant *t*:

• Let STATE be the general state of the process for disseminating the message Mi, STATE taking an initial value "INPROGRESS",
• While STATE = "INPROGRESS", execute the following steps every $\Delta T$ seconds:

o Recover from the module for measuring states of the dissemination (5) the states $I_{Mi}(t)$ indicating at the current instant *t* the mobile nodes or entities of the mobile network that have received the message *Mi*.
∘ Recover from the brokerage module (3) the set $S_C(t)$ of mobile users subscribed to the content of type Type C.
o If cardinal $I_{Mi}(t)$ = cardinal $S_C(t)$

▪ Put STATE = "STOP"

o ELSE

▪ Calculate Texp(Mi), the time remaining before expiry of Mi
▪ If Texp(Mi) > 0, that is to say some time remains before the content of the message Mi becomes obsolete,

• Call a function "Dissemination(Mi,$I_{Mi}$,$S_C$)" which will make it possible to disseminate or transmit the message *Mi to* all the entities which have subscribed to the content of type C.

▪ Else

• Remove Mi from the database (2), the content of the message Mi (information) has become obsolete.

2. The method as claimed in claim 1, **characterized in that** the dissemination function (Mi,$I_{Mi}$,$S_C$) comprises at least the following steps:

the probability that a node or mobile user entity (101i) that has not yet received the message receives it is given by:

$$\cdot \; Pr\left[I(t+dt) - I(t) = 1\right] = \lambda I(t)\left[N - I(t)\right]dt + o(dt)$$

$$\cdot \; Pr\left[I(t+dt) - I(t) > 1\right] = o(dt)$$

➤ determine the state *I(t)* of the propagation or distribution of a message Mi

➤ estimate at this instant t the probability $Pr\left[I(t + \Delta t) = N|I(t)\right]$ that all the nodes or mobile user entities (101i) that have subscribed to the distribution service for the message Mi have received the message or information content, if an additional time $\Delta t$ is waited.

By fixing: a threshold value $\sigma$, a timescale D (equal to Exp(Mi)) for broadcasting a message Mi to the set of nodes of the network, execute the following algorithm:

➤ estimate m the smallest number of mobile nodes which must initially receive the message Mi so that $Pr(I(D) = N|I(0) = m) \geq \sigma$ and do at each call of the algorithm:

• If $Pr(I(D) = N|I(t) = i) \geq \sigma$ then modify nothing
• Else, the probability of being able to disseminate the message Mi by virtue of the m initial nodes is low, then seek the smallest *number k of nodes* allowing the broadcasting of the message Mi to all the entities that have subscribed to the transmission service for Mi, as long as $Pr(I(D) = N|I(t) = i + k) \geq S$, and add k mobile nodes to the set, the k added nodes being chosen at random.

3. The method as claimed in claim 1, **characterized in that** the dissemination function (Mi,$I_{Mi}$,$S_C$) comprises at least the following steps:

Let $p_i(t)$ be the probability that node i is infected at the instant $t$, and $I(t) = (p_i(t))i$, the number of nodes that have received the message Mi

➤ establish the following relation:

$$p_i(t + dt) = p_i(t) + (1 - p_i(t))\left(1 - \prod_{j\neq i}(1 - p_j(t)\lambda_{ij}dt + o(dt))\right)$$
$$= p_i(t) + (1 - p_i(t))\left(\sum_{j\neq i} p_j(t)\lambda_{ij}dt\right) + o(dt)$$

knowing $I_{Mi}(t)$ (the state of the propagation of the message Mi at the instant $t$), fix the values of $p_i(t) \in \{0, 1\}$depending on whether the node (101i) has or has not received the message Mi,

➤ estimate the $p_i(t + \Delta t \mid I(t))$,
knowing $I(t)$, calculate the probability of success of the broadcasting of the message Mi to all the mobile user nodes (101i) at the instant $t + \Delta t$,

$$Pr_{succ}(t + \Delta t \mid I(t)) = \prod p_i(t + \Delta t \mid I(t))$$

In order for the probability that a node or mobile entity receives the message Mi within the lifetime of the message $Pr_{succ}(D) \geq \sigma$ to be permanently greater than or equal to a threshold value $\sigma$

➤ repeat the following algorithm every $\Delta T$ seconds:

$$I_{Mi\_old}(t) := I_{Mi}(t)$$

corresponds to the set of nodes which have received the message Mi.
While $S_C(t) \neq I_{Mi}(t)$ and $Pr_{succ}(D / I_{Mi}(t)) < \sigma$,

• For each node or mobile entity $s$ belonging to the set of nodes which has adhered or subscribed to the content C but which has not yet received the message, recalculate the value of the probability $Pr_{succ}(D \mid I_{Mi}(t))$ by assuming that $s$ is infected
• Let $s_{max}$ be the node which, when it has received the message $Mi$, causes the greatest increase in the value of the probability $Pr_{succ}(D \mid I_{Mi}(t))$,
• Add $s_{max}$ to the set of infected nodes by doing $I_{Mi}(t)=I_{Mi}(t) \cup \{s_{max}\}$ and then broadcast the content or the message $Mi$ to the nodes belonging to the set $I_{Mi}(t) \setminus I_{Mi\_old}(t)$, that is to say the new set excluding the old set.

4. The method as claimed in claim 3, **characterized in that** the estimation of the probabilities $p_i(t + \Delta t \mid I(t))$ is carried out by solving the system $\dfrac{dp_i(t)}{dt} = (1 - p_i(t))\left(\sum_{j\neq i} p_j(t)\lambda_{ij}\right)$ in an approximate manner.

5. A system making it possible to disseminate a message Mi within a network comprising one or more pilot entities (103k, 111k) communicating with one or more mobile nodes or users (101 i) communicating with at least one of the pilot entities, the system comprising:

• at least one pilot entity (103k, 111 k) comprises at least the following elements:
• a Database (2) of the messages Mi to be distributed to the mobile entities or nodes that have subscribed to this type of content
• a brokerage module (3) maintaining the list of mobile user entities (101 i) that are subscribed to a certain type of content,

- a Module for ascertaining and learning the mobility (4) of said mobile entities,
- a module (5) for measuring the state of the disseminations of the messages Mi referenced in the database (2),
- a routing module (6),
- a module for scheduling the transfers (7) making it possible to decide which message or messages are the ones that must be transferred at a given instant and to which mobile entity(entities) via the infrastructure network and executing the steps of the scheduling algorithm as claimed in claim 1, by using the information provided by the database (2), by the brokerage module (3), by the module (5) for measuring the state of the disseminations, by the routing module (6), and by a module (4) for learning the mobility,
- a mobile user entity (101i) of the mobile network comprising at least the following elements:
- a database (12) of the messages Mi received,
- a brokerage module (13) allowing a mobile entity to register with a service,
- a module for scheduling the transfers (15) which makes it possible to decide which message(s) must be transferred and to which mobile entity(entities) (101 i).

6. The system as claimed in claim 5, **characterized in that** a user entity (101 i, 107i) comprises a short-range but high-bitrate UHF (Ultra High Frequency) radio (108) and/or a long-range but low-bitrate VHF (Very High Frequency) radio.

7. The system as claimed in claim 5, **characterized in that** a mobile entity communicates with a pilot entity via a base station, said communication between a user entity and a base station being performed via GPRS or UMTS links and a base station communicates with a pilot entity via Ethernet, FH or Giga Wireless links.

8. The system as claimed in claim 5, **characterized in that** a user entity communicates with a first base station, and then toward a base station by using VHF radio links.

FIG.1a
Scénario 1

Entité pilote

111k

FIG.1b
Scénario 2

F1

109

F2

F3

108

107j

Entité utilisateur

······ e.g., VHF ⎱ Ossature 100

―――― e.g., UHF ⎱ Domaine opportuniste 200

EP 2 502 384 B1

FIG.2

Consigne C (M, G, D) → + − Erreur E → Transmission du contenu vers le sous ensemble de nœud S → Mesure Y →

EP 2 502 384 B1

1 — API de publication

2 — Base de données des messages

7 — Ordonnancement des transferts

vers les nœuds mobiles

8 — Gestion des émissions

10

3 — Module de courtage

5 — Module de mesure de l'état des disséminations

6 — Module de routage

4 — Module de connaissance et apprentissage de la mobilité

9 — Module de réception

## FIG.3

18 — API de notification

19 — API de souscription

12 — Base de données des messages

15 — Ordonnancement des transferts

En provenance des autres nœuds mobiles ou de l'infrastructure

vers les autres nœuds mobiles

Gestion des émissions

11

13 — Module de courtage

14 — Module de routage

20 — Module (Optionnel) d'apprentissage de la mobilité

16

Module de réception

17

## FIG.4

## RÉFÉRENCES CITÉES DANS LA DESCRIPTION

**Documents brevets cités dans la description**

- EP 1133116 A